# EUROPÄISCHE PATENTSCHRIFT

(11) **EP 2 069 725 B1**
(45) Veröffentlichungstag und Bekanntmachung des Hinweises auf die Patenterteilung: **10.10.2012**
(21) Anmeldenummer: 07802741.4
(22) Anmeldetag: 21.08.2007
(51) Int. Cl.: G01F 1/684

(54) **STRÖMUNGSDYNAMISCH VERBESSERTER STECKFÜHLER**
PLUG-IN SENSOR WITH IMPROVED FLOW DYNAMICS
CAPTEUR ENFICHABLE AMÉLIORÉ PAR LA DYNAMIQUE DE CIRCULATION

(30) Priorität: 27.09.2006 DE 102006045656
(43) Veröffentlichungstag der Anmeldung: 17.06.2009
(73) Patentinhaber: Robert Bosch GmbH, 70442 Stuttgart (DE)
(72) Erfinder: KONZELMANN, Uwe, 71679 Asperg (DE); GMELIN, Christoph, 70597 Stuttgart (DE); MAIS, Torsten, 71636 Ludwigsburg (DE)
(86) Internationale Anmeldenummer: PCT/EP2007/058645
(87) Internationale Veröffentlichungsnummer: WO 2008/037546

(56) Entgegenhaltungen:
- DE-A1-102004 022 271
- US-A- 4 981 035
- US-A- 5 571 964

## Beschreibung

### Stand der Technik

Die Erfindung geht aus von Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müssen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Verbrennungskraftmaschinen von Kraftfahrzeugen, insbesondere mit anschließender katalytischer Abgasreinigung, bei denen geregelt eine bestimmte Luftmasse pro Zeiteinheit (Luftmassenstrom) zugeführt werden muss. Zur Messung des Luftmassendurchsatzes werden dabei verschiedene Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluftmassenmessern wird üblicherweise ein Sensorchip eingesetzt, welcher eine dünne Sensormembran aufweist, beispielsweise ein Silicium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt.

Eine beispielsweise aus DE 101 11 840 C2 bekannte Problematik dieses Typs von Sensor besteht darin, dass häufig Kontaminationen des Sensorelementes auftreten können, beispielsweise Kontaminationen durch Wasser, Öl oder andere Flüssigkeiten bzw. andere Arten von Verunreinigungen. Der Sensorchip wird üblicherweise direkt im Ansaugtrakt der Verbrennungskraftmaschine oder in einem Bypass zum Ansaugtrakt der Verbrennungskraftmaschine eingesetzt. Dabei kann sich im Betrieb der Verbrennungskraftmaschine Wasser oder Öl auf dem Sensorchip und dabei insbesondere auf der Sensormembran niederschlagen. Dieser Verunreinigungsniederschlag kann zu einer unerwünschten Messsignalbeeinflussung des Sensors führen, insbesondere da ein Flüssigkeitsfilm auf der Oberfläche des Sensors auf die Wärmeleitfähigkeit der Oberfläche einwirkt, was zur Verfälschung der Messsignale führt. Ähnliche Probleme treten neben Heißfilmluftmassenmessern auch bei anderen Arten von Sensoren auf, welche zur Messung von Fluidparametern in einer Fluidströmung eingesetzt werden.

Zur Lösung dieser Verunreinigungsproblematik, insbesondere um zu verhindern, dass Wasser oder Öl auf den Sensorchip gelangen, sind aus dem Stand der Technik verschiedene Ansätze bekannt. Ein Ansatz, welcher beispielsweise in DE 10 2004 022 271 A1 beschreiben wird, ist die Verwendung eines so genannten "Bypass". Hierbei wird ein Steckfühler verwendet, welcher mit einem Steckerteil in ein Ansaugrohr eingesteckt wird, wobei anströmseitig in den Steckerteil eine Einlassöffnung vorgesehen ist. Im Steckfühler ist ein Hauptströmungskanal vorgesehen, durch welchen ein wesentlicher Teil der Strömung von der Einlassöffnung zu einer Ausscheidungsöffnung strömt. Vom Hauptkanal zweigt an einer scharfen Kante, welche auch als "Nase" bezeichnet wird, ein Bypasskanal ab, in welchem ein Sensorchip angeordnet ist. Der Bypasskanal mündest schließlich in eine Auslassöffnung an der Unterseite des Steckfühlers. Die scharfe Kante an der Abzweigung des Bypasskanals bewirkt dabei, dass Wassertröpfchen aufgrund Ihrer Massenträgheit nur erschwert in den Bypasskanal eindringen können und überwiegend im Hauptkanal verbleiben.

Nachteilig an den aus dem Stand der Technik beschriebenen Steckfühlerkonstruktionen ist jedoch, dass die beschriebenen Steckfühler mit ihrer aerodynamisch ungünstigen Gestalt in vielen Fällen im Ansaugtrakt Probleme bezüglich eines Strömungswiderstand-bedingten Druckabfalls verursachen. Hinzu kommt, dass die Signalreproduzierbarkeit der Signale derartiger Sensoren vergleichsweise gering ist. DE 10 2004 022 271 A1 schlägt daher eine Konstruktion vor, bei welcher im Strömungsrohr fest installiert ein Strömungsableitteil als separatcs Bauteil vorgesehen ist. Alternativ wird auch eine einstückige Ausgestaltung des Strömungsableitteils mit dem Steck fühler vorgeschlagen. Weiterhin ist im Strömungsrohr eine Strömungsleitwand fest installiert, welche eine Beruhigung der Strömung hinter dem Steckfühler bewirken soll.

Diese aus DE 10 2004 022 271 A1 bekannte Konstruktion ist jedoch in der Praxis mit verschiedenen Nachteilen verbunden. So besteht ein Nachteil darin, dass das Strömungsableitteil in der Regel fest in einem Abschnitt des Strömungsrohres installiert ist. Diese feste Installation verursacht zusätzliche Kosten bei der Herstellung dieses Rohrabschnitts, ebenso wie das Vorsehen der zusätzlichen Strömungsleitwand. Bei einstückiger Ausführung ist die Einbaulänge zudem für viele Anwendungen zu lang. Außerdem ist die in DE 10 2004 022 271 A1 offenbarte Konstruktion weiter hinsichtlich des Druckabfalls am Steckfühler optimierbar.

Die US 4,981,035 offenbart einen Luftmassenmesser, bei dem ein Sensorelement direkt auf einer Oberfläche eines Montageelements in einem Bypasskanal angeordnet ist. Um das Sensorelement vor Staubpartikeln und dergleichen zu schützen, ist ein Ablenkungsbauteil stromaufwärts des Montageelements vorgesehen.

### Offenbarung der Erfindung

Es wird daher ein Steckfühler zur Bestimmung wenigstens eines Parameters eines mit einer Hauptströmungsrichtung strömenden fluiden Mediums vorgeschlagen, welcher die oben^{.}beschriebenen Nachteile bekannter Konstruktionen ganz oder teilweise vermeidet. Bei dem fluiden Medium kann es sich um eine Flüssigkeit oder ein Gas handeln, und bei dem wenigstens einen Parameter beispielsweise um einen Druck, eine Temperatur, eine Geschwindigkeit, einen Luftmassendurchsatz oder ähnliches. Besonders bevorzugt ist die Ausgestaltung des Steckfühlers als Heißfilmluftmassenmesser zur Messung einer durch ein Strömungsrohr strömenden Ansaugluftmasse einer Brennkraftmaschine.

Ein Grundgedanke der vorliegenden Erfindung besteht dabei darin, den Steckfühler kompakt und universell einsetzbar auszugestalten, so dass auf eine aufwändige Konstruktion des Strömungsrohres verzichtet werden kann. Der Weg zu dieser kompakten Ausgestaltung bei geringem Druckabfall und guter Signalreproduzierbarkeit ohne weitere Hilfsmittel im Strömungsrohr führt erfindungsgemäß über eine wohl definierte Außenströmung um den Steckfühler herum, welche unempfindlich ist gegenüber Störungen und unterschiedlichen Zuströmzuständcn des strömenden fluiden Mediums. Zu diesem Zweck wird erfindungsgemäß auf Erkenntnisse aus dem Flugzeugbau (Hydrodynamik, Aerodynamik) zurückgegriffen.

Der erfindungsgemäße Steckfühler weist ein Steckerteil auf, welches in vorgegebener Ausrichtung zur Hauptströmungsrichtung in das strömende fluide Medium, welches insbesondere in dem Strömungsrohr strömt, einbringbar ist. In dem Steckerteil ist mindestens ein Strömungskanal mit mindestens einer Einlassöffnung und mindestens einer Auslassöffnung vorgesehen, wobei in den mindestens einen Strömungskanal mindestens ein Sensor zur Bestimmung des mindestens einen Parameters aufgenommen ist. Vorzugsweise handelt es sich, wie oben beschrieben, bei dem mindestens einen Sensor um einen Heißfilmluftmassenmesser-Sensorchip. Weiterhin weist das Steckerteil eine abgerundete Anströmseite auf, ähnlich zu DE 10 2004 022 271 A1, wobei die abgerundete Anströmseite in das Steckerteil integriert ist, so dass keine zusätzlichen Ausgestaltungen des Strömungsrohres erforderlich sind. Die abgerundete Anströmkante weist der Hauptströmungsrichtung entgegen. Mindestens eine Einlassöffnung des mindestens einen Strömungskanals ist im Bereich der abgerundeten Anströmseite, der Hauptströmungsrichtung entgegengesetzt, angeordnet.

Die Besonderheit des vorgeschlagenen Steckfühlers besteht darin, dass das Steckerteil zumindest teilweise ein Trägflächenprofil aufweist, welches derart ausgestaltet ist, dass sich bei in das strömende fluide Medium eingebrachtem Steckerteil eine asymmetrische Strömung des fluiden Mediums einstellt. Dabei lassen sich grundsätzlich verschiedene Ausgestaltungen von Tragflächenprofilen einsetzen, welche beispielsweise aus dem Flugzeugbau bekannt sind. Der Vorteil der erfindungsgemäßen Ausgestaltung besteht darin, dass sich durch die Asymmetrieeffekte gezielt Strömungsgeschwindigkeiten auf einer Seite des Steckerteils erhöhen und auf der anderen Seite erniedrigen lassen. Auf diese Weise können in Bereichen, wo dies für den Betrieb des Steckfühlers besonders günstig ist, Erhöhungen der Geschwindigkeit im strömenden fluiden Medium herbeigeführt werden. So kann beispielsweise, wie dies in einer bevorzugten Ausgestaltung der Erfindung der Fall ist, die mindestens eine Auslassöffnung (das heißt eine oder alle Auslassöffnungen der mindestens einen Auslassöffnung) seitlich auf dem mindestens einen Tragflächenprofil angeordnet sein. Vorzugsweise weist das Tragflächenprofil eine Auslassseite mit mindestens einer Auslassöffnung auf und eine Gegenseite ohne Auslassöffnung. In diesem Fall ist das Tragflächenprofil vorzugsweise derart ausgestaltet, dass sich bei in das strömende fluide Medium eingebrachtem Steckerteil ein Strömungsprofil im fluiden Medium einstellt, bei welchem die Geschwindigkeit des strömenden fluiden Mediums auf der Auslassseite höher ist als auf der Gegenseite. Durch diese Erhöhung der Strömungsgeschwindigkeit im Bereich der mindestens einen Auslassöffnung kann aufgrund des hydrodynamischen Saugeffektes der Durchsatz durch den mindestens einen Strömungskanal namischen Saugeffektes der Durchsatz durch den mindestens einen Strömungskanal erhöht und dadurch die Funktionalität des Steckfühlers verbessert werden.

Der mindestens eine Strömungskanal kann beispielsweise ausgestaltet sein, wie dies in DE 10 2204 022 271 A1 beschrieben ist (siehe auch die obige Beschreibung des Standes der Technik). So kann der mindestens eine Strömungskanal mindestens einen Hauptkanal und mindestens einen Bypasskanal aufweisen, wobei der mindestens eine Hauptkanal mindestens einen Hauptstromauslass aufweist und wobei der mindestens eine Bypasskanal mindestens einen Bypassauslass aufweist. Vorzugsweise ist dann zumindest der mindestens eine Bypassauslass seitlich auf dem mindestens einen Tragflächenprofil angeordnet. Alternativ oder zusätzlich kann auch der mindestens eine Hauptstromauslass seitlich auf dem mindestens einen Tragflächenprofil angeordnet sein.

Das Tragflächenprofil kann, wie oben beschrieben, auf verschiedene Weisen ausgestaltet sein. Besonders bevorzugt ist es, wenn das Tragflächenprofil auf der bei in das strömende Medium eingebrachtem Steckfühler strömungsabgewandten Seite ein im Wesentlichen gerades, zur Hauptströmungsrichtung im Wesentlichen senkrecht stehendes Heck aufweist. Diese Ausgestaltung ist ähnlich zur in DE 10 2004 022 271 A1 beschriebenen Ausgestaltung, wobei durch das senkrecht stehende Heck die Bildung eines Ablösebereiches abströmseitig des Steckerteils begünstigt wird.

Die Asymmetrie im Strömungsprofil um das Tragflächenprofil herum kann auf verschiedene Weisen bewerkstelligt werden. Eine bevorzugte Möglichkeit besteht darin, das Steckerteil unter einem Anstellwinkel zur Hauptströmungsrichtung in die Strömung des fluiden Mediums einzubringen. Unter einem Anstellwinkel wird dabei, wie im Flugzeugbau üblich, ein Winkel zwischen einer Profilmittellinie der Tragfläche und der Hauptströmungsrichtung bezeichnet. Vorzugsweise liegt erfindungsgemäß dieser Anstellwinkel zwischen 0 und 7°, besonders bevorzugt zwischen 2° und 5°, wobei sich ein Winkel von 4° als besonders günstig erwiesen hat. Der optimale Anstellwinkel ist dabei abhängig von der verwendeten Profilierung bzw. dem verwendeten Querschnitt des Tragflächenprofils.

Eine weitere, alternative oder zusätzliche Möglichkeit zur Herbeiführung einer Asymmetrie im Strömungsprofil um das Tragflächenprofil herum besteht darin, eine Profilwölbung des Tragflächenprofils vorzusehen. Unter einer Profilwölbung versteht man dabei, wie in der Tragflächenkonstruktion üblich, eine Krümmung der Skelettlinie der Tragfläche. Die Skelettlinie ist dabei die Verbindungslinie aller in das Tragflächenprofil eingeschriebener maximalen Kreise. Die Profilwölbung wird üblicherweise in Prozent angegeben, wobei die Prozentzahl der Profilwölbung auf die so genannte Profiltiefe, also die Länge der Profilmittellinie, bezogen ist. Vorzugsweise liegt erfindungsgemäß die Profilwölbung für einen optimalen Betrieb des Steckfühlers im Bereich zwischen 0 und 10 %, vorzugsweise zwischen 2 % und 7 % und besonders bevorzugt bei ca. 5 %.

Ein weiterer Grundgedanke der Erfindung besteht in der besonderen Ausgestaltung asymmetrischer Strömungsprofile unter Berücksichtigung der aus der Tragflächentechnik bekannten Strömungsablösung des fluiden Mediums vom Tragflächenprofil. So hat es sich gezeigt, dass im Betrieb üblicher Steckfühler, insbesondere bei Lastwechseln (jedoch auch im stationären Betrieb) Oszillationen in der Strömung, insbesondere der Ablösung der Strömungsgrenzschichten von der Oberfläche des Steckfühlers, auftreten können. Diese Oszillationen führen zu Druckschwankungen, welche die Signalqualität des Steckfühlers nachteilig beeinflussen.

Eine erfindungsgemäße Idee liegt nun, alternativ oder zusätzlich zur Nutzung des asymmetrischen Strömungsprofils zur Erhöhung des Durchsatzes durch den mindestens einen Strömungskanal, darin, ein Ablöseelement auf einer Seite des Tragflächenprofils (vorzugsweise auf genau einer Seite) vorzusehen, welches ebenfalls für eine asymmetrische Strömung sorgt, welches jedoch dazu beiträgt, die Strömungsablösung vom Steckerteil zu stabilisieren. Diese Stabilisierung erfolgt derart, dass die Ablösung ohne größere Schwankungen oder Oszillationen stets in einem vorgegebenen Ablösebereich auf dem Tragflächenprofil erfolgt. Zu diesem Zweck ist das mindestens eine Ablöseelement vorzugsweise ausgestaltet, um bei in das strömende fluide Medium eingebrachtem Steckerteil ein zumindest lokales Druckminimum auf dieser Seite des Tragflächenprofils zu bewirken. Je ausgeprägter dieses fixierte Druckminimum und der anschließende Druckanstieg sind, desto stabiler ist die Ablösung des strömenden fluiden Mediums vom Steckerteil in diesem Ablösebereich.

Aus der Tragflächenkonstruktion sind wiederum verschiedene Beispiele derartiger Ablösebereiche bekannt, welche eingesetzt werden können, um dieses lokale Druckminimum (das heißt ein lokales Geschwindigkeitsmaximum) in der Strömung zu bewirken. Eine bevorzugte Möglichkeit besteht darin, auf einer Seite des Tragflächenprofils ein Knickprofil vorzusehen. Im Bereich dieses Knickes weist das Tragflächenprofil eine Steigungsunstetigkeit auf, in welcher die Steigung des Tragflächenprofils sich unstetig ändert. Der Begriff "Steigung" des Tragflächenprofils wird dabei, wie auch im Folgenden als Steigung relativ zur Hauptströmungsrichtung bei verschwindendem Anstellwinkel verstanden. Dieses Knickprofil kann beispielsweise dadurch ausgestaltet sein, dass das Tragflächenprofil anströmseitig vor dem Knickprofil gekrümmt mit positiver Steigung verläuft und abströmseitig hinter dem Knickprofil mit negativer Steigung, vorzugsweise gerade, vorzugsweise in einem Winkel zu einer Profilmittellinie des Tragflächenprofils zwischen 5° und 80°, besonders bevorzugt zwischen 20° und 70°. In anderen Worten sieht diese bevorzugte Ausgestaltung des Knickprofils eine Abschrägung des Steckerteils auf der Abströmseite vor, wobei die Abschrägung zur Profilmittellinie hin gerichtet ist. Dieses Knickprofil hat sich in der Praxis als zuverlässiges Ablöseelement erwiesen, an welchem ein Druckminimum auftritt und an welchem sich Strömungsgrenzschichten vom Tragflächenprofil ablösen. Schwankungen des Ablösebereichs lassen sich dadurch zuverlässig vermeiden, wodurch die Signalqualität auch bei wechselnden Lastzuständen erheblich verbessert werden kann. Das Tragflächenprofil weist insgesamt einen geringen Widerstand auf, und der Druckabfall am Steckerteil ist gering. Mittels derartiger Ausgestaltungen kann in der Regel auch auf heute üblicherweise eingesetzte Beruhigungsgitter zum Beruhigen der Strömung im Strömungsrohr verzichtet werden.

Eine weitere, alternative oder zusätzliche Möglichkeit, das Ablöseelement zu gestalten, besteht darin, ein Stufenprofil vorzusehen. Unter einem Stufenprofil soll dabei eine Stufe im Tragflächenprofil verstanden werden, also umgangssprachlich zunächst ein "Knick in eine Richtung" und anschließend ein "Knick in die entgegengesetzte Richtung". Vorzugsweise, insbesondere aufgrund der vereinfachten Konstruktion, ist dieses Stufenprofil rechteckig ausgestaltet. Auch andere Stufenprofile sind jedoch denkbar, beispielsweise mit überhängenden, spitzen Stufen, um eine noch zuverlässigere Ablösung von Strömungsgrenzschichten in diesem Bereich zu bewirken.

Eine dritte, alternative oder zusätzliche Möglichkeit, das mindestens eine Ablöseelement auszugestalten, besteht darin, ein so genanntes "Hügelprofil" vorzusehen. Unter einem "Hügelprofil" ist dabei ein Profil zu verstehen, in welchem die Steigung des Tragflächenprofils von der Anströmseite des fluiden Mediums bis hin zur Abströmseite einen Wechsel (unter stetigem Verlauf) von einer positiven Steigung hin zu einer negativen Steigung durchführt. Vorzugsweise ist dabei die Krümmung im Bereich der negativen Steigung stärker als im Bereich der positiven Steigung, wobei unter "Steigung" die erste Ableitung des Tragflächenprofils, und unter "Krümmung" die zweite Ableitung zu verstehen ist. Weiterhin kann auch, alternativ oder zusätzlich, ein Profil vorgesehen sein, bei welchem das Ablöseelement im bevorzugten Ablösebereich einen Wendepunkt im Verlauf des Tragflächenprofils aufweist.

Die beiden oben beschriebenen Effekte, nämlich eine Unterstützung des Fluiddurchsatzes durch den mindestens einen Strömungskanal durch ein asymmetrisches Strömungsprofil und die Fixierung des Ablösebereichs lassen sich auf vorteilhafte Weise dadurch kombinieren, dass mindestens eine der mindestens einen Auslassöffnung im Bereich des zumindest lokalen Druckminimums angeordnet ist. Insbesondere kann zumindest ein Bypassauslass ganz oder teilweise im Bereich des mindestens einen Ablöseelements und/oder abströmseitig des mindestens einen Ablöseelements angeordnet sein. Auch eine derartige Anordnung des mindestens einen Hauptstromauslasses ist, alternativ oder zusätzlich, von Vorteil. Diese besondere Ausgestaltung der Anordnung der mindestens einen Auslassöffnung kombiniert die beiden oben beschriebenen erfindungsgemäßen Effekte auf besonders vorteilhafte Weise. Der Luftaustritt aus der mindestens einen Auslassöffnung verursacht ansonsten an nahezu jeder anderen Stelle am Steckfühler Störungen in der Strömung des Mediums. Diese Störungen sind im Bereich der Strömungsablösung am geringsten, was einen weiteren positiven Nebeneffekt dieser Anordnung darstellt.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1A: einen im Ansaugtrakt einer Brennkraftmaschine eingesetzten Heißfilmluftmassenmesser;
- Figur 1B: einen geöffneten Heißfilmluftmassenmesser in Draufsicht;
- Figur 2: eine Prinzipdarstellung eines Tragflächenprofils;
- Figur 3: eine erstes Ausführungsbeispiel eines Tragflächenprofils eines erfindungsgemäßen Steckfühlers mit einer Abschrägung;
- Figur 4: ein zweites erfindungsgemäßes Ausführungsbeispiel eines Steckfühlers mit einer Abschrägung und einer Stufe;
- Figur 5A: ein Druckprofil über einem dritten Ausführungsbeispiel eines erfindungsgemäßen Steckfühlers;
- Figur 5B: ein Druckprofil über einem vierten Ausführungsbeispiel eines Steckfühlers;
- Figur 5C: ein Druckprofil über einem fünften Ausführungsbeispiel eines Steckfühlers;
- Figur 6A: eine Seitenansicht eines Steckfühlers mit zwei Auslassöffnungen im Bereich eines Ablöseelements; und
- Figur 6B: ein zu Figur 6A alternatives Ausführungsbeispiel eines Steckfühlers, bei welchem lediglich eine Auslassöffnung im Bereich eines Ablöseelements angeordnet ist.

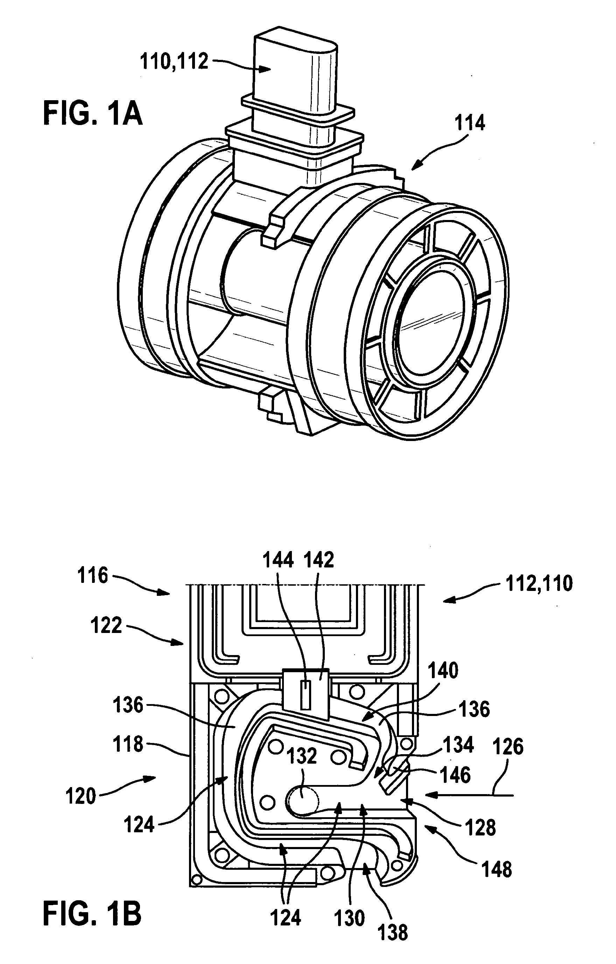

In Figur 1A ist ein dem Stand der Technik entsprechendes Ausführungsbeispiel eines Steckfühlers 110 dargestellt, welcher in diesem Fall als Heißfilmluftmassenmesser 112 ausgebildet ist. Der Heißfilmluftmassenmesser 112 ist in einen Ansaugtrakt 114 einer Brennkraftmaschine eingesetzt, welche in Figur 1A nicht dargestellt ist. Derartige Heißfilmluftmassenmesser 112 sind kommerziell erhältlich. Der Heißfilmluftmassenmesser 112 ist ausgestaltet, um die Strömungsrichtung eines Ansaugstromes zu erkennen und ist für eine Lasterfassung bei Brennkraftmaschinen mit Benzin- oder Dieselkraftstoffeinspritzung konzipiert. Der Einbau des Heißfilmluftmassenmessers 112 erfolgt üblicherweise zwischen einem Luftfilter und einer Drosselvorrichtung und erfolgt in der Regel als vormontierte Baugruppe. Dementsprechend weist der Steckfühler 110 ein Steckerteil 116 auf, welches in Figur 1B in geöffnetem Zustand in Seitenansicht dargestellt ist und welche in Figur 1A in den Ansaugtrakt 114 hineinragt. In Figur 1B ist erkennbar, dass in diesem Ausführungsbeispiel des Heißfilmluftmassenmessers 112 ein Messgehäuse 118 des Heißfilmluftmassenmessers 112 unterteilt ist in einen Strömungsbereich 120 und einen Elektronikbereich 122. Im Strömungsbereich 120 ist ein Strömungskanal 124 aufgenommen, welcher in diesem, dem Stand der Technik entsprechenden Ausführungsbeispiel ausgestaltet ist wie in DE 10 2004 022 271A1 beschrieben. Der Steckfühler 110 wird von Luft in einer Hauptströmungsrichtung 126 angeströmt. Die Luft strömt durch eine Einlassöffnung 128 in den Strömungskanal 124 ein. Der Strömungskanal 124 weist einen Hauptkanal 130 auf, welcher sich im Wesentlichen gerade, entlang der Hauptströmungsrichtung 126 von der Einlassöffnung 128 zu einem Hauptstromauslass 132 befindet. Der Hauptstromauslass 132 befindet sich hierbei seitlich in einer Wand des Steckerteils 116.

Vom Hauptkanal 130 zweigt an einer Abzweigung 134 ein Bypasskanl 136 ab, welcher sich im Wesentlichen mit gekrümmtem Verlauf um den Hauptstromauslass 132 herum bis zu einem an der Unterseite des Steckerteils 116 gelegenen Bypassauslass 138 erstreckt. In einem geraden Abschnitt 140 ragt aus dem Elektronikbereich 122 ein Chipträger 142 mit einem darin eingelassenen Sensorchip 144 in den Bypasskanal 136. Der Chipträger 142 ist üblicherweise an einer im Elektronikbereich 122 aufgenommenen, in Figur 1B nicht dargestellten Elektronikplatine befestigt (beispielsweise angespritzt), wobei die Elektronikplatine eine Auswerte- und Ansteuerschaltung des Heißfilmluftmassenmessers 112 umfassen kann.

Um Verunreinigungen wie beispielsweise flüssige Verunreinigungen (zum Beispiel Wasser, Öl) oder feste Verunreinigungen von dem Sensorchip 144 fernzuhalten, ist an der Abzweigung 134 des Bypasskanals 136 eine scharfkantige Nase 146 vorgesehen. An dieser Nase wird der Hauptstrom vom durch den Bypasskanal 136 strömenden Teil der Luft getrennt, derart, dass Wassertröpfchen und andere Verunreinigungen geradeaus weiter durch den Hauptkanal 130 strömen und im Wesentlichen nicht zum Sensorchip 144 gelangen können.

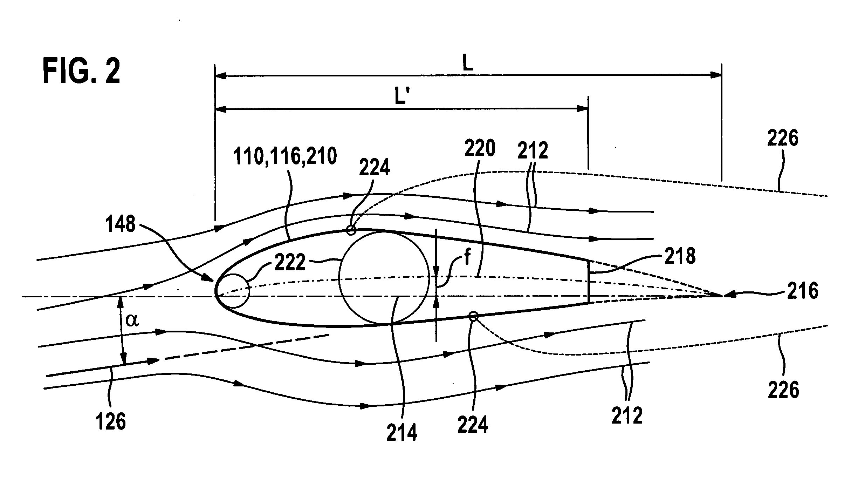

Eine Problematik des dem Stand der Technik entsprechenden Heißfilmluftmassenmessers 112 besteht in der Ausgestaltung des Steckerteils 116 mit im Wesentlichen rechteckigem Querschnitt in einer Schnittebene senkrecht zur Zeichenebene in Figur 1B. Dementsprechend weist das Steckerteil 116 eine Anströmseite 148 mit einer im Wesentlichen senkrecht zur Hauptströmungsrichtung 126 ausgestalteten Fläche auf. Ein Grundgedanke der Erfindung besteht darin, die Anströmseite 148 als abgerundete Anströmseite auszugestalten, wobei die Abrundung bereits im Steckerteil 116 und somit im Steckfühler 110 integriert ist. Insgesamt weist das Steckerteil 116 in einer Schnittebene senkrecht zur Zeichenebene in Figur 1B, zumindest im Bereich der Einlassöffnung 128, ein Tragflächenprofil 210 auf, welches beispielhaft in Figur 2 dargestellt ist. Anhand der Prinzipdarstellung in Figur 2 sollen die grundlegenden Begriffe des Tragflächenprofils 210 erläutert werden.

Das Tragflächenprofil 210 weist erfindungsgemäß eine abgerundete Anströmseite 148 auf, welche im Wesentlichen der Hauptströmungsrichtung 126 entgegengesetzt orientiert ist, wenn das Steckerteil 116 im Ansaugtrakt 114 der Brennkraftmaschine montiert ist. Die Anströmseite 148 wird dabei bei Tragflächen häufig auch als Staupunkt bezeichnet.

Die Strömung der Luft um das Tragflächenprofil 210 herum ist in Figur 2 symbolisch durch die Stromlinien 212 dargestellt. Dabei wird deutlich, dass die Strömung um das Tragflächenprofil 210 erfindungsgemäß aus zweierlei Gründen asymmetrisch ist. Zum Einen ist die Profilmittellinie 214 auf eine gedachte Linie zwischen Scheitelpunkt der Anströmseite 148 und der fiktiven Hinterkante 216 des Tragflächenprofils gegenüber der Hauptströmungsrichtung 126 um einen Winkel α verkippt. Dadurch steigt die Strömungsgeschwindigkeit über dem Tragflächenprofil 210 an, und unter dem Tragflächenprofil 210 sinkt diese ab. Dementsprechend steigt der Druck unter dem Tragflächenprofil 210 an und sinkt über dem Tragflächenprofil 210 ab. Dies bewirkt den bekannten Auftriebseffekt von Tragflächen.

Eine Besonderheit des Tragflächenprofils 210 gemäß dem Ausführungsbeispiel in Figur 2 besteht darin, dass das Tragflächenprofil 210 eher ein "abgeschnittenes" Heck 218 aufweist. Dies bedeutet, dass das Heck im Wesentlichen senkrecht zur Profilmittellinie 214 steht, bzw., bei verschwindendem Anstellwinkel α, senkrecht zur Hauptströmungsrichtung 126. Alternativ zur in Figur 2 eingezeichneten Definition der Profilmittellinie 214 ließe sich diese auch dadurch definieren, dass sich diese vom Scheitelpunkt der Anströmseite 148 zum Mittelpunkt des Hecks 218 erstreckt.

Neben der oben aufgeführten Asymmetrie der Strömung durch den Anstellwinkel α relativ zur Hauptströmungsrichtung 126 wird in dem Ausführungsbeispiel des Tragflächenprofils 210 gemäß Figur 2 eine weitere Asymmetrie dadurch herbeigeführt, dass dieses eine Profilwölbung aufweist. So ist in Figur 2 die so genannte Skelettlinie 220 eingezeichnet, welche geometrisch dadurch erhalten wird, dass dem Tragflächenprofil 210 Innenkreise 222 eingeschrieben werden. Die Gesamtheit der Mittelpunkte dieser Innenkreise 222 bildet die Skelettlinie 220. Eine Profilwölbung bedeutet, dass diese Skelettlinie 220, welche bei perfekt symmetrischem Tragflächenprofil 210 auf der Profilmittellinie 214 zu liegen käme, nunmehr von dieser Profilmittellinie 214 abweicht. Die maximale Abweichung f der Skelettlinie 220 von der Profilmittellinie 214 wird als Profilwölbung bezeichnet. Häufig wird diese auf die Gesamtlänge L des Tragflächenprofils 210 bezogen und in Prozent angegeben. Dabei kann die Gesamtlänge L, wie in Figur 2 eingezeichnet, vom Scheitelpunkt der Anströmseite 148 bis zur fiktiven Hinterkante 216 gemessen werden, oder es kann (wie bei den obigen Zahlenangaben der bevorzugten Profilwölbung) ein Bezug auf die Länge L' genommen werden, welche zwischen dem Scheitpunkt der Anströmseite 148 und dem Heck 218 gemessen wird. Somit ergibt sich als Profilwölbung in Prozent das Verhältnis f/L'. Durch die Profilwölbung wird eine zusätzliche Asymmetrie herbeigeführt, welche die Verdichtungen der Stromlinien 212 oberhalb des Tragflächenprofils 210 noch verstärkt und somit den beschriebenen Effekt der Erhöhung der Geschwindigkeit in diesem Bereich.

Der Verlauf der Stromlinien 212 in Figur 2 ist idealisiert dargestellt und ist bei üblichen Tragflächenprofilen 210 in dieser Weise häufig nicht zu finden. Tatsächlich tritt in der Regel an jeweils einem oder mehreren Separationspunkten auf der Oberseite und zum Teil auch auf der Unterseite des Tragflächenprofils 210 eine Strömungsablösung auf. Dabei lösen sich in der Regel eine oder mehrere Grenzschichten, welche bis dahin das Tragflächenprofil 210 umgeben haben, von diesem ab und bilden eine oder mehrere Ablösungszonen. Diese Ablösepunkte 224 und die abgelösten Grenzschichten 226 sind in Figur 2 symbolisch angedeutet, wobei ebenfalls angedeutet ist, dass bei angestelltem Tragflächenprofil 210 der obere Ablösepunkt 224 in der Regel weiter anströmseitig gelegen ist als der untere Ablösepunkt 224. Anstelle eines wohldefinierten Ablösepunktes 224, welcher ohnehin keinen Punkt, sondern eine Linie senkrecht zur Zeichenebene darstellt, können unter den Ablösepunkten 224 auch Bereiche oder Zonen mit einer endlichen Ausdehnung verstanden werden.

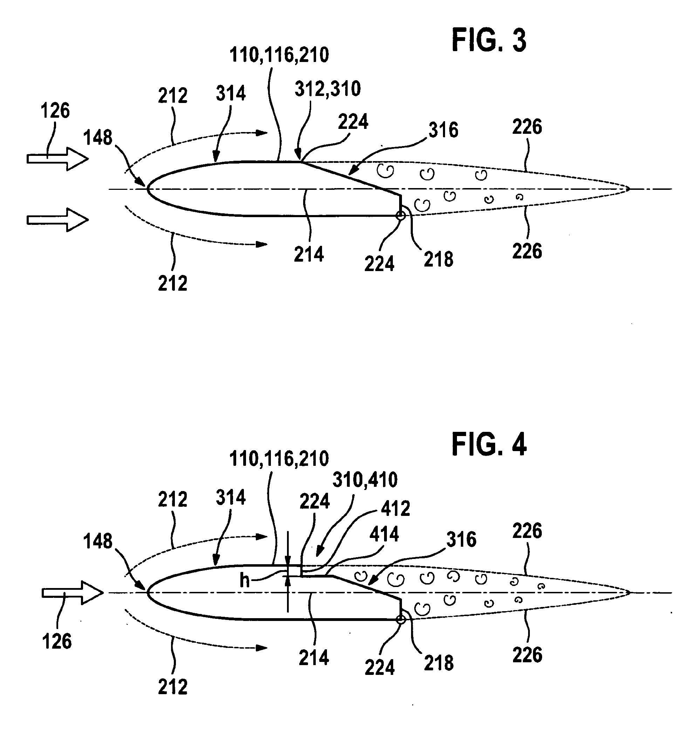

Eine Problematik, auf welche oben bereits eingegangen wurde, besteht darin, dass diese Ablösepunkte 224, an welchem sich abgelöste Grenzschichten 226 bilden, in vielen Fällen instabil sind und sogar oszillieren können. Die Lage der abgelösten Grenzschichten 226 relativ zu der Lage des Hauptstromauslasses 132 und des Bypassauslasses 138 wirkt sich jedoch empfindlich auf das Strömungsverhalten im Strömungskanal 124 und somit auf die Signaleigenschaften des Heißfilmluftmassenmessers 112 aus. Gemäß einer weiteren Idee der Erfindung lässt sich daher mindestens ein Ablöseelement 310 vorsehen, welches die Lage des Ablösepunkts 224 auf mindestens einer Seite des Tragflächenprofils 210, vorzugsweise auf der Oberseite (das heißt auf der Seite mit erhöhter Strömungsgeschwindigkeit) stabilisiert und vorzugsweise fixiert. In den Figuren 3, 4 und 5A bis 5C sind verschiedene Ausführungsbeispiele derartiger Ablöseelemente 310 dargestellt.

Bei dem in Figur 3 dargestellten Ausführungsbeispiel eines Tragflächenprofils 210 ist ein Knickprofil 312 vorgesehen. Wie aus Figur 3 erkennbar, ist dieses Knickprofil 312 auf der Oberseite des Tragflächenprofils 210 ungefähr in der Mitte zwischen Anströmseite 148 und Heck 218 angeordnet, bzw. leicht hinter dieser Mitte. Das Tragflächenprofil 210 ist dabei derart ausgestaltet, dass dieses vor dem Knickprofil 312, das heißt anströmseitig, gekrümmt ist und im gekrümmten Bereich 314 mit positiver Steigung verläuft. Hinter dem Knickprofil 312, das heißt abströmseitig vom Knickprofil 312, ist das Tragflächenprofil 210 in einem Abflachungsbereich 316 abgeflacht und verläuft dort mit negativer Steigung eben zur Profilmittellinie 214 hin. Anschließend ist wiederum ein abgeschnittenes Heck 218 vorgesehen.

Diese Ausgestaltung des Tragflächenprofils 210 mit dem Ablöseelement 310 bewirkt, dass der obere Ablösepunkt 224 im Wesentlichen im Ablöseelement 310 fixiert wird. Auf der Unterseite des Tragflächenprofils 210 wird sich der Ablösepunkt 224 üblicherweise an der Ecke zum senkrechten Heck 218 einstellen. Die abgelösten Grenzschichten sind in Figur 3 wiederum mit der Bezugsziffer 226 bezeichnet und symbolisch angedeutet. Um den vorderen Teil des Tragflächenprofils 210 herum wird die Strömung auf beiden Seiten bis zu den Ablösepunkten 224 gleichmäßig beschleunigt, was zu einer sehr stabilen, unempfindlichen Strömungstopologie führt. Die entstehenden abgelösten Grenzschichten 226 sind in ihrer Ausdehnung klein, sind stationär und stören somit die Reproduzierbarkeit der Messung nicht oder nur geringfügig. Wäre das Tragflächenprofil 210 symmetrisch mit anliegender, beschleunigter Strömung auf beiden Seiten, ergäbe sich eine wesentlich größere Gesamtdicke des Steckerteils 116 und damit ein größerer Materialbedarf und ein größerer Druckabfall am Steckfühler 110.

In Figur 4 ist ein zu Figur 3 alternatives Ausführungsbeispiel eines Tragflächenprofils 210 mit einem Ablöseelement 310 dargestellt. Im Gegensatz zum Ausführungsbeispiel in Figur 3 ist hier kein Knickprofil 312 vorgesehen, sondern ein Stufenprofil 410, an welches sich wiederum, analog zu Figur 3, abströmseitig ein Abflachungsbereich 316 anschließt. Das Stufenprofil 410 ist in diesem Fall als rechteckige Stufe ausgestaltet, mit einer ersten Stufenfläche 412 senkrecht zur Profilmittellinie 214 und einer zweiten Stufenfläche 414 parallel zur Profilmittellinie 214. Die Stufenhöhe h beträgt vorteilhafterweise mindestens 0,5 mm, wobei jedoch auch andere Stufenhöhen praktikabel sind. Insbesondere werden Stufenhöhen h im Bereich zwischen 1% und 20% der gesamten Profildicke des Tragflächenprofils 210 bevorzugt. Die zweite Stufenfläche 414 hat typischerweise eine Länge zwischen 1,0 und 7,0 mm, wobei insgesamt Längen zwischen 1 % und 20% der Profiltiefe bevorzugt sind. Die Strömung kann an dieser Stufe dem scharfen Knick nicht folgen und löst sich von der Oberfläche des Tragflächenprofils 210 ab. Die abgelösten Grenzschichten 226 erhalten somit nahezu stets die gleiche Größe und Form und bleiben stabil, auch wenn sich die Anströmverhältnisse ändern. Die stabile Strömungstopologie vermindert Rückwirkungen der Strömung auf das Signal des Heißfilmluftmassenmessers 112 und führt zu besserer Reproduzierbarkeit des Messsignals.

Auch andere Ausgestaltungen des Stufenprofils 410 sind denkbar. So könnte beispielsweise die erste Stufenfläche 412 unter einem von 90° abweichenden Winkel zur Profilmittellinie 214 angeordnet sein, so dass die Stufe einen leichten, zur Abströmseite geneigten Überhang aufweist, mit einer scharfen Kante (spitzer Winkel) an der Oberseite. Hierdurch kann die Fixierung des Ablösepunkts 224 weiter verbessert werden.

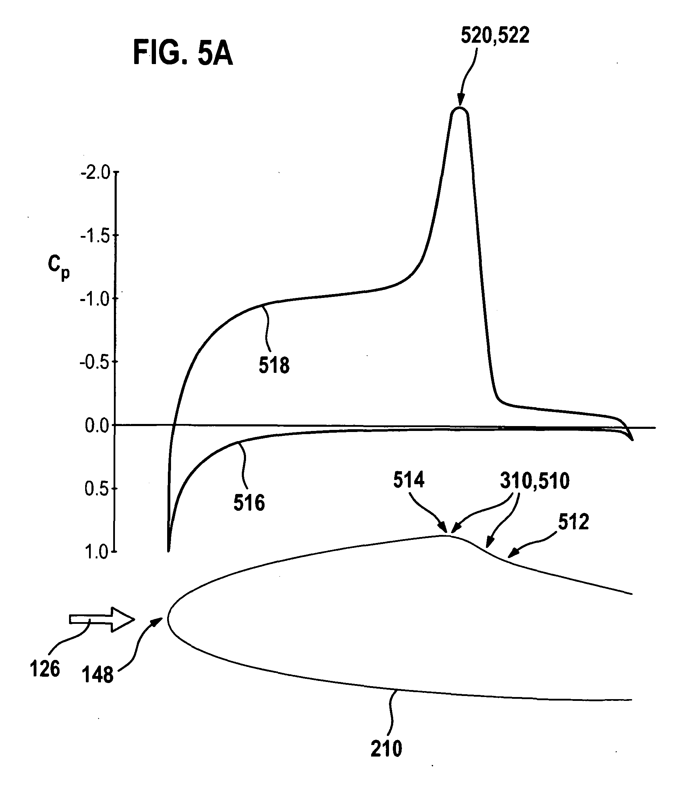

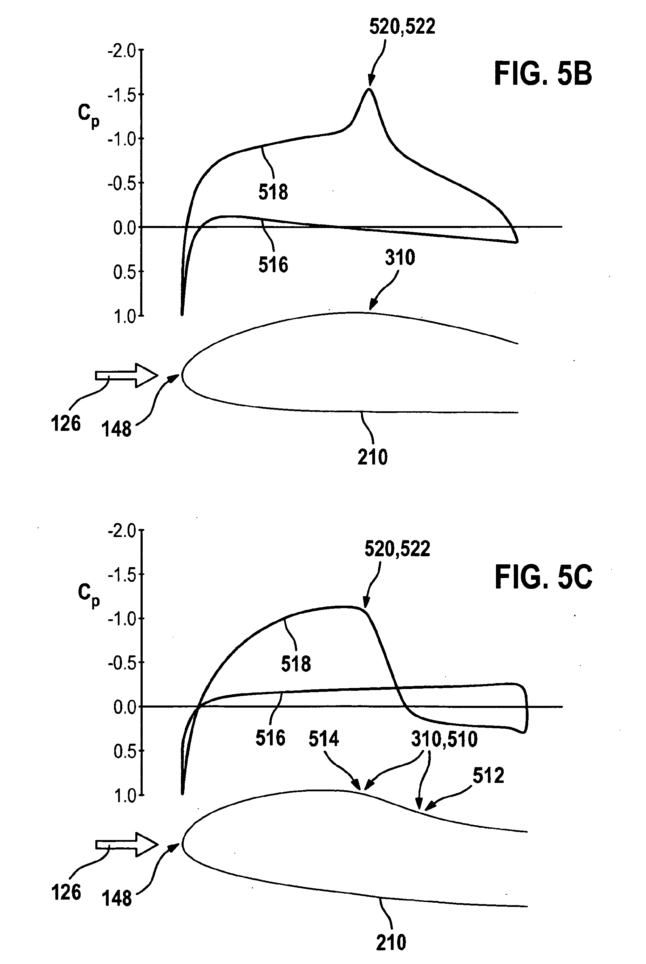

In den Figuren 5A bis 5B sind schematisch weitere Ausführungsbeispiele von Tragflächenprofilen 210 dargestellt, welche ebenfalls Ablöseelemente 310 aufweisen. Im Gegensatz zu den Ausführungsbeispielen in den Figuren 3 und 4 weisen diese Ablöseelemente 310 jedoch keine scharfen Kanten mit Unstetigkeiten in der Steigung (Knicken) auf, sondern Ablöseelemente 310 mit einem stetigen Verlauf der Steigung des Tragflächenprofils 210. Dabei zeigen die Figuren 5A und 5C Ausführungsbeispiele von Hügelprofilen 510 mit einem zusätzlichen Wendepunkt 512, wohingegen Figur 5B ein Ausführungsbeispiel eines Hügelprofils 510 ohne Wendepunkt zeigt. Bei den Hügelprofilen 510 gemäß den Figuren 5A und 5C ist jeweils ein Maximum 514 zu erkennen, also ein Punkt, an welchem die Steigung des Tragflächenprofils 210 ein stetigen Wechsel von einer positiven Steigung hin zu einer negativen Steigung durchführt (von der Anström- zur Abströmseite).

Die Ablöseelemente 310 mit stetigem Verlauf der Steigung weisen gegenüber Knicken den Vorteil auf, dass geringere Störungen in der Strömung des fluiden Mediums verursacht werden. Dadurch ist der gesamte Druckabfall an dem Tragflächenprofil 210 geringer. Außerdem weisen Ablöseelemente 310 mit stetigem Verlauf der Steigung insbesondere bei kleinen Strömungsgeschwindigkeiten eine geringere Gefahr eines Wiederanlegens der abgelösten Strömungen auf.

Über den Tragflächenprofilen 210 sind in den Figuren 5A bis 5C jeweils ein Druckprofil 516 auf der Unterseite des Tragflächenprofils 210 und ein Druckprofil 518 auf der Oberseite des Tragflächenprofils 210 aufgetragen, welches mit Simulationsrechnungen berechnet wurde. Dabei ist der so genannte Druckbeiwert cₚ aufgetragen, also das dimensionslose Verhältnis zwischen dem Druck und dem Staudruck, als Funktion der Position entlang der Profilmittellinie 214 (welche in diesen Figuren nicht dargestellt ist). Dabei ist zu beachten, dass die Achse des Druckbeiwerts cₚ hier invertiert ist, so dass nach oben hin negative Werte aufgetragen sind.

Wie sich aus den Auftragungen der Druckbeiwerte erkennen lässt, weist das Druckprofil 516 auf der Unterseite des Tragflächenprofils 210 jeweils einen gleichförmigen Verlauf auf, während das Druckprofil 518 auf der Oberseite des Tragflächenprofils 210 jeweils eine Abnormalität 520 aufweist. Diese Abnormalität 520 ist als Minimum 522 im Druck ausgestaltet. Entsprechend tritt in diesem Bereich der Abnormalität 520 ein Maximum in der Strömungsgeschwindigkeit der Luft auf. Es hat sich gezeigt, dass diese Abnormalität 520, welche durch die beschriebene Kontur des Tragflächenprofils 210 mit dem Ablöseelement 310 räumlich am Tragflächenprofil 210 festgelegt ist, gut geeignet ist, um den Ablösepunkt 224 auf der Oberseite des Tragflächenprofils 210 zu fixieren, so dass die Strömungsablösung definiert und ohne größere Schwankungen im Betrieb erfolgt.

Ein weiterer positiver Nebeneffekt der in den Figuren 5A bis 5C dargestellten Beispiele von Tragflächenprofilen 210 liegt darin, dass, wie die Druckprofile 516 auf der Unterseite zeigen, eine stärkere Beschleunigung der Strömung auf dieser Unterseite des Tragflächenprofils auftritt. Damit werden in der Regel alle Tendenzen der Strömung, sich in diesem Bereich abzulösen, zuverlässig unterbunden.

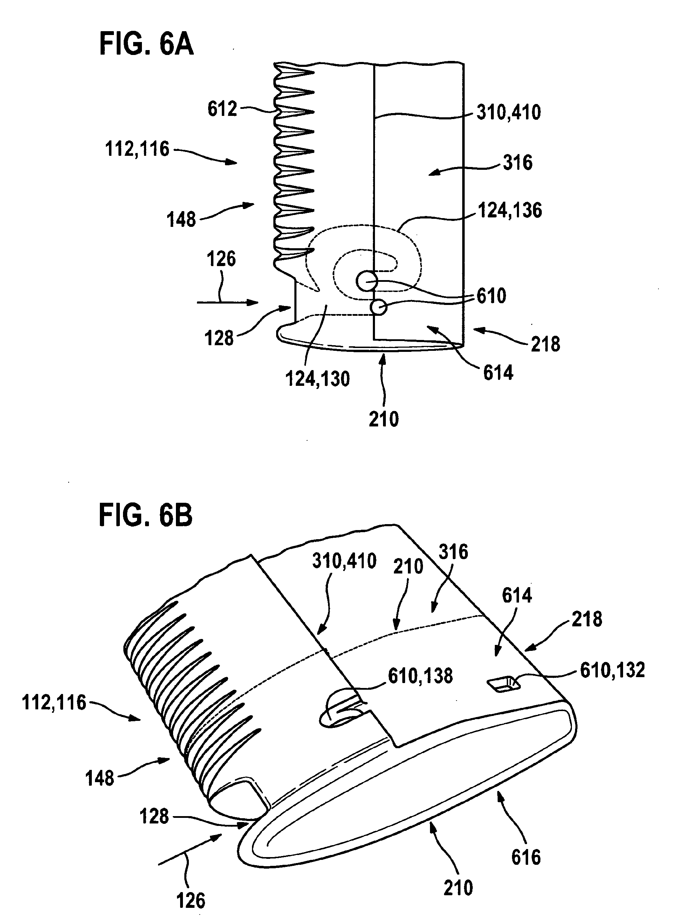

In den Figuren 6A und 6B sind zwei verschiedene Ausführungsbeispiele von Steckerteilen 116 eines Heißfilmluftmassenmessers 112 perspektivisch dargestellt, bei denen Auslassöffnungen 610 entlang des Tragflächenprofils 210 unterschiedlich positioniert sind. Dabei entspricht das Tragflächenprofil 210, wie in Figur 6B durch die gestrichelte Linie dargestellt, dem Tragflächenprofil gemäß dem Ausführungsbeispiel in Figur 4, das heißt es ist ein Ablöseelement 310 mit einem Stufenprofil 410 vorgesehen. Analog könnte jedoch auch jede beliebige andere Ausgestaltung des Ablöseelements 310 verwendet werden, beispielsweise die Ausgestaltung in Figur 3 oder in den Figuren 5A bis 5C.

Wiederum ist die Anströmseite 148 des Steckerteils 116 abgerundet ausgestaltet, wobei in diesem Ausführungsbeispiel in der Anströmseite 148 mehrere Schlitze 612 ausgebildet sind. Die Funktion dieser Schlitze liegt in einer Turbulenz-Stabilisierung der Grenzschicht und ist in DE 10 2004 022 271 A1 beschrieben.

Die beiden Ausführungsbeispiele gemäß den Figuren 6A und 6B unterscheiden sich dabei in der Lage der Auslassöffnungen 610. In beiden Fällen ist ein Strömungskanal 124 im Inneren des Steckerteils 116 angeordnet, welcher lediglich in Figur 6A gestrichelt angedeutet ist und welcher in Figur 6B nicht zu erkennen ist. Wiederum ist dabei der Strömungskanal 124 mit einem Hauptkanal 130 und einem Bypasskanal 136 ausgestaltet, wobei im Bypasskanal 136 der Sensorchip 144 (in Figur 6A nicht dargestellt) angeordnet ist. Somit entspricht die Anordnung im Wesentlichen dem dem Stand der Technik entsprechenden Ausführungsbeispiel gemäß Figur 1B in Ausgestaltung und Funktion.

In diesem Satz zum Ausführungsbeispiel gemäß Figur 1B sind jedoch bei dem erfindungsgemäßen Ausführungsbeispiel gemäß Figur 6A beide Auslassöffnungen 610 in der Seitenwand des Steckerteils 116 vorgesehen, insbesondere der Bypassauslass 138, welcher im Ausführungsbeispiel gemäß Figur 1B auf der Unterseite des Steckerteils 116 angeordnet ist. Die Seitenwand, in der beiden Auslassöffnungen 610 vorgesehen sind, ist in Figur 6A symbolisch mit der Bezugsziffer 614 bezeichnet, die Gegenseite (siehe Figur 6B) mit 616. Dabei ist zu erkennen, dass der Bypassauslass 138 derart angeordnet ist, dass dieser auf dem als Stufenprofil 410 ausgebildeten Ablöseelement 310 zu liegen kommt. Diese Ausgestaltung, welche auch in dem Beispiel gemäß Figur 6B zu finden ist, bietet gegenüber dem Stand der Technik gemäß Figur 1B den Vorteil, dass der Bypassauslass 138 nunmehr im Bereich des Druckminimums bzw. des Geschwindigkeitsmaximums angeordnet ist. Dementsprechend wird die Saugwirkung verstärkt, und der Luftmassendurchsatz durch den Bypasskanal 136 wird erhöht. Dadurch wird der Signalhub des Heißfilmluftmassenmessers 112 deutlich erhöht, und das Signal-zu-Rauschverhältnis wird stark verbessert.

Wie ein Vergleich der Figuren 6A und 6B ergibt, kann der Hauptstromauslass 132 im Bereich des Hecks 218 angeordnet sein (Figur 6B) oder dieser Hauptstromauslass 132 kann ebenfalls im Bereich des Ablöseelements 310 platziert werden (Figur 6A). Letztere Ausgestaltung bietet einen ähnlichen Vorteil wie beim Bypassauslass 138, nämlich dass eine Anordnung im Bereich eines Geschwindigkeitsmaximums zu einem optimalen Luftmassendurchsatz durch den Heißfilmluftmassenmesser 112 führt. Auch hierdurch wird die Signalqualität, wie oben beschrieben, verbessert.

## Patentansprüche

1. Steckfühler (110) zur Bestimmung wenigstens eines Parameters eines mit einer Hauptströmungsrichtung (126) strömenden fluiden Mediums, insbesondere einer durch ein Strömungsrohr strömenden Ansaugluftmasse einer Brennkraftmaschine, mit einem in das strömende fluide Medium in vorgegebener Ausrichtung zur Hauptströmungsrichtung (126) einbringbaren Steckerteil (116), wobei im Inneren des Steckerteils (116) mindestens ein Strömungskanal (124) mit mindestens einer Einlassöffnung (128) und mindestens einer Auslassöffnung (610) vorgesehen ist, wobei in dem mindestens einen Strömungskanal (124) mindestens ein Sensor (144) zur Bestimmung des mindestens einen Parameters aufgenommen ist, wobei das Steckerteil (116) eine abgerundete Anströmseite (148) aufweist, wobei die abgerundete Anströmseite (148) der Hauptströmungsrichtung (126) entgegenweist und wobei der mindestens eine Strömungskanal (124) mindestens eine Einlassöffnung (128) im Bereich der abgerundeten Anströmseite (148) aufweist, **dadurch gekennzeichnet, dass** die Außenkontur des Steckerteils senkrecht zu seiner Einsteckrichtung die Form eines Tragflächenprofils aufweist, welches derart ausgestaltet ist, dass sich bei in das strömende fluide Medium eingebrachtem Steckerteil (116) ein asymmetrisches Strömungsprofil des fluiden Mediums einstellt, derart dass die Strömungsgeschwindigkeit auf der einen Seite des Steckerteils erhöht und auf der die Gegenseite bildenden anderen Seite des Steckerteils erniedrigt wird.

2. Steckfühler (110) gemäß dem vorhergehenden Anspruch, **dadurch gekennzeichnet, dass** das die mindestens eine Auslassöffnung (610) seitlich auf dem mindestens einen Tragflächenprofil (210) angeordnet ist.

3. Steckfühler (110) gemäß dem vorhergehenden Anspruch, **dadurch gekennzeichnet, dass** der mindestens eine Strömungskanal (124) mindestens einen Hauptkanal (130) und mindestens einen Bypasskanal (136) aufweist, wobei der mindestens eine Hauptkanal (130) mindestens einen Hauptstromauslass (132) aufweist und wobei der mindestens eine Bypasskanal (136) mindestens einen Bypassauslass (138) aufweist, wobei der mindestens eine Hauptstromauslass (132) und/oder der mindestens eine Bypassauslass (138) seitlich auf dem mindestens einen Tragflächenprofil (210) angeordnet ist

4. Steckfühler (110) gemäß einem der beiden vorhergehenden Ansprüche, **dadurch gekennzeichnet, dass** das Tragflächenprofil (210) eine Auslassseite mit mindestens einer Auslassöffnung (610) und eine Gegenseite ohne Auslassöffnung (610) aufweist, wobei das Tragflächenprofil (210) derart ausgestaltet ist, dass sich bei in das strömende fluide Medium eingebrachtem Steckerteil (116) ein Strömungsprofil einstellt, bei welchem die Geschwindigkeit des strömenden fluiden Mediums auf der Auslassseite (614) höher ist als auf der Gegenseite (616).

5. Steckfühler (110) gemäß einem der vorhergehenden Ansprüche, **dadurch gekennzeichnet, dass** das Tragflächenprofil (210) auf der bei in das strömende Medium eingebrachtem Steckfühler (110) strömungsabgewandten Seite ein im Wesentlichen gerades, zurHauptströmungsrichtung (126) im Wesentlichen senkrecht stehendes Heck (218) aufweist.

6. Steckfühler (110) gemäß einem der vorhergehenden Ansprüche, **dadurch gekennzeichnet, dass** das Tragflächenprofil (210) bei in das strömende fluide Medium eingebrachtem Steckerteil (116) einen Anstellwinkel a zur Hauptströmungsrichtung (126) zwischen 0° und 7°, vorzugsweise zwischen 2° und 5° und besonders bevorzugt bei 4°, aufweist.

7. Steckfühler (110) gemäß einem der vorhergehenden Ansprüche, **dadurch gekennzeichnet, dass** das Tragflächenprofil (210) eine Profilwölbung zwischen 0% und 10%, vorzugsweise zwischen 2% und 7% und besonders bevorzugt bei 5% aufweist.

8. Steckfühler (110) gemäß einem der vorhergehenden Ansprüche, **dadurch gekennzeichnet, dass** das Tragflächenprofil (210) derart ausgestaltet ist, dass bei in das strömende fluide Medium eingebrachtem Steckerteil (116) in mindestens einer Ablösezone (224) auf mindestens einer Seite des Tragflächenprofils (210) in der Strömung des fluiden Mediums ein zumindest lokales Druckminimum auftritt, wobei mindestens eine der mindestens einen Auslassöffnung (610) ganz oder teilweise in der Ablösezone (224) angeordnet ist.

9. Steckfühler (110) gemäß einem der vorhergehenden Ansprüche, **dadurch gekennzeichnet, dass** das Tragflächenprofil (210) auf mindestens einer Seite, vorzugsweise nur auf einer Seite, in welcher mindestens eine Auslassöffnung (610) angeordnet ist, mindestens ein Ablöseelement (310) aufweist, wobei das mindestens eine Ablöseelement (310) ausgestaltet ist, um bei in das strömende fluide Medium eingebrachtem Steckerteil (116) ein zumindest lokales Druckminimum zu bewirken.

10. Steckfühler (110) gemäß dem vorhergehenden Anspruch, **dadurch gekennzeichnet, dass** das mindestens eine Ablöseelement (310) mindestens eines der folgenden Profile aufweist:
- ein Knickprofil (312) mit einer Steigungsunstetigkeit, wobei die Steigung des Tragflächenprofils (210) sich unstetig ändert;
- ein Stufenprofil (410) mit mindestens einer, vorzugsweise rechteckigen, Stufe im Tragflächenprofil (210), vorzugsweise einer Stufe mit einer Höhe von mehr als 0,5 mm;
- ein Hügelprofil (510), wobei bei dem Hügelprofil (510) die Steigung des Tragflächenprofils (210) von der Anströmseite (148) des fluiden Mediums hin zur Abströmseite des fluiden Mediums einen stetigen Wechsel von positiver Steigung zu negativer Steigung durchführt, wobei die Krümmung im Bereich der negativen Steigung vorzugsweise stärker ist als im Bereich der positiven Steigung;
- ein Wendeprofil mit mindestens einem Wendepunkt (512) im Verlauf des Tragflächenprofils (210).

11. Steckfühler (110) gemäß dem vorhergehenden Anspruch, **dadurch gekennzeichnet, dass** ein Knickprofil (312) vorgesehen ist, wobei das Tragflächenprofil (210) anströmseitig vor dem Knickprofil (312) gekrümmt mit positiver Steigung verläuft und wobei das Tragflächenprofil (210) abströmseitig hinter dem Knickprofil (312) mit negativer Steigung, vorzugsweise gerade, verläuft, vorzugsweise in einem Winkel zu einer Profilmittellinie des Tragflächenprofils (210) zwischen 5° und 80° und besonders bevorzugt zwischen 20° und 70°.

12. Steckfühler (110) gemäß einem der drei vorhergehenden Ansprüche, **dadurch gekennzeichnet, dass** mindestens eine Auslassöffnung (610), vorzugsweise zumindest ein Bypassauslass (138), ganz oder teilweise im Bereich des mindestens einen Ablöseelements (310) und/oder abströmseitig des mindestens einen Ablöseelements (310) angeordnet ist.

## Claims

1. Plug-in sensor (110) for determining at least one parameter of a fluid medium which flows in a main flow direction (126), in particular of an intake air mass flow, which flows through a flow pipe, of an internal combustion engine, having a plug part (116) which can be introduced into the flowing fluid medium with a prespecified orientation with respect to the main flow direction (126), wherein at least one flow channel (124) having at least one inlet opening (128) and at least one outlet opening (610) is provided in the interior of the plug part (116), wherein at least one sensor (144) for determining the at least one parameter is accommodated in the at least one flow channel (124), wherein the plug part (116) has a rounded inflow side (148), wherein the rounded inflow side (148) faces in the opposite direction to the main flow direction (126), and wherein the at least one flow channel (124) has at least one inlet opening (128) in the region of the rounded inflow side (148), **characterized in that** the outer contour of the plug part has the shape of a hydrofoil profile perpendicular to its insertion direction, the said hydrofoil profile being designed in such a way that, when the plug part (116) is inserted in the flowing fluid medium, an asymmetrical flow profile of the fluid medium is established in such a way that the flow rate is increased on one side of the plug part and is reduced on the other side of the plug part, this other side forming the opposite side.

2. Plug-in sensor (110) according to the preceding claim, **characterized in that** the at least one outlet opening (610) is arranged laterally on the at least one hydrofoil profile (210).

3. Plug-in sensor (110) according to the preceding claim, **characterized in that** the at least one flow channel (124) has at least one main channel (130) and at least one bypass channel (136), wherein the at least one main channel (130) has at least one main flow outlet (132), and wherein the at least one bypass channel (136) has at least one bypass outlet (138), wherein the at least one main flow outlet (132) and/or the at least one bypass outlet (138) are/is arranged laterally on the at least one hydrofoil profile (210).

4. Plug-in sensor (110) according to one of the two preceding claims, **characterized in that** the hydrofoil profile (210) has an outlet side having at least one outlet opening (610) and an opposite side without an outlet opening (610), wherein the hydrofoil profile (210) is designed in such a way that a flow profile is established when the plug part (116) is inserted in the flowing fluid medium, the speed of the flowing fluid medium on the outlet side (614) being higher than on the opposite side (616) in the case of the said flow profile.

5. Plug-in sensor (110) according to one of the preceding claims, **characterized in that** the hydrofoil profile (210) on the side which is averted from the flow when the plug-in sensor (110) is inserted in the flowing medium has a substantially straight rear (218) which is substantially perpendicular to the main flow direction (126).

6. Plug-in sensor (110) according to one of the preceding claims, **characterized in that** the hydrofoil profile (210) has a setting angle α relative to the main flow direction (126) of between 0° and 7°, preferably of between 2° and 5°, and particularly preferably of 4°, when the plug part (116) is inserted in the flowing fluid medium.

7. Plug-in sensor (110) according to one of the preceding claims, **characterized in that** the hydrofoil profile (210) has a profile curvature of between 0% and 10%, preferably of between 2% and 7%, and particularly preferably of 5%.

8. Plug-in sensor (110) according to one of the preceding claims, **characterized in that** the hydrofoil profile (210) is designed in such a way that, when the plug part (116) is inserted in the flowing fluid medium, an at least local pressure minimum occurs in at least one separation zone (224) on at least one side of the hydrofoil profile (210) in the flow of the fluid medium, wherein at least one outlet opening (610) is arranged entirely or partially in the separation zone (224).

9. Plug-in sensor (110) according to one of the preceding claims, **characterized in that** the hydrofoil profile (210) has at least one separation element (310) on at least one side, preferably only on a side in which at least one outlet opening (610) is arranged, wherein the at least one separation element (310) is designed in order to create an at least local pressure minimum when the plug part (116) is inserted in the flowing fluid medium.

10. Plug-in sensor (110) according to the preceding claim, **characterized in that** the at least one separation element (310) has at least one of the following profiles:
- a bent profile (312) with an irregularity in the gradient, wherein the gradient of the hydrofoil profile (210) changes in an irregular manner;
- a stepped profile (410) with at least one, preferably rectangular, step in the hydrofoil profile (210), preferably a step with a height of more than 0.5 mm;
- a hill profile (510), wherein, in the case of the hill profile (510), the gradient of the hydrofoil profile (210) undergoes a continuous change from a positive gradient to a negative gradient from the inflow side (148) of the fluid medium in the direction of the outflow side of the fluid medium, wherein the curvature in the region of the negative gradient is preferably more pronounced than in the region of the positive gradient;
- a turned profile with at least one turning point (512) over the course of the hydrofoil profile (210).

11. Plug-in sensor (110) according to the preceding claim, **characterized in that** a bent profile (312) is provided, wherein the hydrofoil profile (210) runs in a curved manner with a positive gradient on the inflow side in front of the bent profile (312), and wherein the hydrofoil profile (210) runs, preferably in a straight line, with a negative gradient on the outflow side behind the bent profile (312), preferably at an angle to a profile centre line of the hydrofoil profile (210) of between 5° and 80°, and particularly preferably of between 20° and 70°.

12. Plug-in sensor (110) according to one of the three preceding claims, **characterized in that** at least one outlet opening (610), preferably at least one bypass outlet (138), is arranged entirely or partially in the region of the at least one separation element (310) and/or on the outflow side of the at least one separation element (310).

## Revendications

1. Sonde enfichable (110) pour déterminer au moins un paramètre d'un milieu fluide qui s'écoule dans une direction principale d'écoulement (126), en particulier d'une masse d'air d'admission d'un moteur à combustion interne qui s'écoule à travers un tube d'écoulement, comprenant une partie enfichable (116) pouvant être placée, dans le milieu fluide s'écoulant, suivant une orientation prédéfinie par rapport à la direction principale d'écoulement (126), au moins un canal d'écoulement (124) possédant au moins une ouverture d'entrée (128) et au moins une ouverture de sortie (610) étant prévu à l'intérieur de la partie enfichable (116), au moins un capteur (144) pour déterminer l'au moins un paramètre étant reçu dans l'au moins un canal d'écoulement (124), la partie enfichable (116) comprenant un côté d'attaque (148) arrondi, le côté d'attaque (148) arrondi étant en regard de la direction principale d'écoulement (126), et l'au moins un canal d'écoulement (124) comprenant au moins une ouverture d'entrée (128) dans la région du côté d'attaque (148) arrondi, **caractérisée en ce que** le contour extérieur de la partie enfichable présente la forme d'un profil de surface portante perpendiculairement à sa direction d'enfichage, lequel profil de surface portante est configuré de telle sorte que, lorsque la partie enfichable (116) est placée dans le milieu fluide s'écoulant, un profil d'écoulement asymétrique du milieu fluide s'établisse, de telle sorte que la vitesse d'écoulement soit accrue d'un côté de la partie enfichable et soit réduite de l'autre côté de la partie enfichable formant le côté opposé.

2. Sonde enfichable (110) selon la revendication précédente, **caractérisée en ce que** l'au moins une ouverture de sortie (610) est disposée latéralement sur l'au moins un profil de surface portante (210).

3. Sonde enfichable (110) selon la revendication précédente, **caractérisée en ce que** l'au moins un canal d'écoulement (124) comprend au moins un canal principal (130) et au moins un canal de dérivation (136), l'au moins un canal principal (130) comprenant au moins une sortie de flux principale (132) et l'au moins un canal de dérivation (136) comprenant au moins une sortie de dérivation (138), l'au moins une sortie de flux principale (132) et/ou l'au moins une sortie de dérivation (138) étant disposées latéralement sur l'au moins un profil de surface portante (210).

4. Sonde enfichable (110) selon l'une des deux revendications précédentes, **caractérisée en ce que** le profil de surface portante (210) comprend un côté de sortie possédant au moins une ouverture de sortie (610) et un côté opposé dépourvu d'ouverture de sortie (610), le profil de surface portante (210) étant configuré de telle sorte que, lorsque la partie enfichable (116) est placée dans le milieu fluide s'écoulant, un profil d'écoulement s'établisse, dans lequel la vitesse du milieu fluide s'écoulant est plus élevée du côté de la sortie (614) que du côté opposé (616).

5. Sonde enfichable (110) selon l'une quelconque des revendications précédentes, **caractérisée en ce que** le profil de surface portante (210) présente, du côté opposé à l'écoulement lorsque la sonde enfichable (110) est placée dans le milieu s'écoulant, une partie arrière (218) essentiellement rectiligne et essentiellement perpendiculaire à la direction principale d'écoulement (126).

6. Sonde enfichable (110) selon l'une quelconque des revendications précédentes, **caractérisée en ce que** le profil de surface portante (210), lorsque la partie enfichable (116) est placée dans le milieu fluide s'écoulant, présente un angle d'incidence α par rapport à la direction principale d'écoulement (126) entre 0° et 7°, de préférence entre 2° et 5°, et de manière particulièrement préférée de 4°.

7. Sonde enfichable (110) selon l'une quelconque des revendications précédentes, **caractérisée en ce que** le profil de surface portante (210) présente une courbure de profil entre 0% et 10%, de préférence entre 2 et 7%, et de manière particulièrement préférée de 5%.

8. Sonde enfichable (110) selon l'une quelconque des revendications précédentes, **caractérisée en ce que** le profil de surface portante (210) est configuré de telle sorte que, lorsque la partie enfichable (116) est placée dans le milieu fluide s'écoulant, un minimum de pression au moins local apparaisse dans l'écoulement du milieu fluide dans au moins une zone de décollement (224) sur au moins un côté du profil de surface portante (210), au moins une ouverture de sortie (610) étant disposée complètement ou partiellement dans la zone de décollement (224).

9. Sonde enfichable (110) selon l'une quelconque des revendications précédentes, **caractérisée en ce que** le profil de surface portante (210) comprend au moins un élément de décollement (310) au moins d'un côté, de préférence uniquement d'un côté, dans lequel est disposée au moins une ouverture de sortie (610), l'au moins un élément de décollement (310) étant configuré pour occasionner un minimum de pression au moins local lorsque la partie enfichable (116) est placée dans le milieu fluide s'écoulant.

10. Sonde enfichable (110) selon la revendication précédente, **caractérisée en ce que** l'au moins un élément de décollement (310) comprend au moins l'un des profils suivantes :
- un profil coudé (312) présentant une discontinuité de pente, la pente du profil de surface portante (210) variant de manière discontinue ;
- un profil en gradin (410) possédant au moins un gradin, de préférence rectangulaire, dans le profil de surface portante (210), de préférence un gradin possédant une hauteur de plus de 0,5 mm ;
- un profil vallonné (510), la pente du profil de surface portante (210), dans le cas du profil vallonné (510), effectuant un changement continu d'une pente positive à une pente négative à partir du côté d'attaque (148) du milieu fluide en direction du côté de fuite du milieu fluide, la courbure dans la région de la pente négative étant de préférence plus forte que celle dans la région de la pente positive ;
- un profil infléchi possédant au moins un point d'inflexion (512) dans le tracé du profil de surface portante (210).

11. Sonde enfichable (110) selon la revendication précédente, **caractérisée en ce qu'**un profil coudé (312) est prévu, le profil de surface portante (210) s'étendant de manière courbe avec une pente positive en amont à l'avant du profil coudé (312), et le profil de surface portante (210) s'étendant, en aval derrière le profil coudé (312), avec une pente négative, de préférence de manière rectiligne, de préférence suivant un angle par rapport à une ligne centrale du profil de surface portante (210) entre 5° et 80°, et de manière particulièrement préférée entre 20° et 70°.

12. Sonde enfichable (110) selon l'une quelconque des trois revendications précédentes, **caractérisée en ce qu'**au moins une ouverture de sortie (610), de préférence au moins une sortie de dérivation (138), est disposée complètement ou partiellement dans la région de l'au moins un élément de décollement (310) et/ou en aval de l'au moins un élément de décollement (310).
